# EUROPEAN PATENT APPLICATION

(11) **EP 4 671 171 A1**
(43) Date of publication of application: **31.12.2025**
(21) Application number: 25184432.0
(22) Date of filing: 23.06.2025
(51) Int. Cl.: B65H 1/04, B65H 3/06, B65H 7/02, B65H 7/06

(54) **SHEET CONVEYING DEVICE CAPABLE OF SUPPRESSING LOWERING OF ACQUISITION ACCURACY OF SHEET CONVEYING SPEED, IMAGE FORMING APPARATUS, AND ACQUISITION METHOD**

(30) Priority: 25.06.2024 JP 2024102056
(71) Applicant: KYOCERA Document Solutions Inc., Osaka-shi, Osaka 540-8585 (JP)
(72) Inventor: Okamoto, Sueaki, Osaka-shi, 540-8585 (JP); Kitabayashi, Yuta, Osaka-shi, 540-8585 (JP); Toyota, Yuji, Osaka-shi, 540-8585 (JP); Kamiyama, Yuji, Osaka-shi, 540-8585 (JP)
(74) Representative: Plougmann Vingtoft a/s

(57) **Abstract**

A sheet conveying device includes a lift portion (31), a sheet supply portion (28), a detection portion (25), and an acquisition processing portion (42). The lift portion (31) lifts a stack of sheets (SB1). The sheet supply portion (28) includes a conveying member (22) which rotates while being in contact with an upper surface of the stack of sheets (SB1) lifted by the lift portion (31), and supplies a sheet (SH1) that comes into contact with the conveying member (22) to a conveying path (27). The detection portion (25) detects the sheet (SH1) supplied by the sheet supply portion (28) on the conveying path (27). The acquisition processing portion (42) acquires, only when the stack of sheets (SB1) is lifted by the lift portion (31), speed information related to a conveying speed of the sheet (SH1) by the sheet supply portion (28) using the detection portion (25).

## Description

### BACKGROUND

The present disclosure relates to a sheet conveying device, an image forming apparatus, and an acquisition method.

An image forming apparatus such as a multifunction peripheral includes a sheet conveying device which conveys a sheet on which an image is to be formed. For example, the sheet conveying device includes a lift portion, a sheet supply portion, and a detection portion. The lift portion lifts a stack of sheets. The sheet supply portion includes a conveying member which rotates while being in contact with an upper surface of the stack of sheets lifted by the lift portion, and supplies the sheet that comes into contact with the conveying member to a conveying path. The detection portion detects the sheet supplied by the sheet supply portion on the conveying path.

Further, the sheet conveying device which measures a conveying speed of the sheet by the sheet supply portion using the detection portion is known.

### SUMMARY

A sheet conveying device according to an aspect of the present disclosure includes a lift portion, a sheet supply portion, a detection portion, and an acquisition processing portion. The lift portion lifts a stack of sheets. The sheet supply portion includes a conveying member which rotates while being in contact with an upper surface of the stack of sheets lifted by the lift portion, and supplies a sheet that comes into contact with the conveying member to a conveying path. The detection portion detects the sheet supplied by the sheet supply portion on the conveying path. The acquisition processing portion acquires, only when the stack of sheets is lifted by the lift portion, speed information related to a conveying speed of the sheet by the sheet supply portion using the detection portion.

An image forming apparatus according to another aspect of the present disclosure includes the sheet conveying device and an image forming portion. The image forming portion forms an image on the sheet conveyed by the sheet conveying device.

An acquisition method according to another aspect of the present disclosure is executed in a sheet conveying device including a lift portion which lifts a stack of sheets, a sheet supply portion which includes a conveying member which rotates while being in contact with an upper surface of the stack of sheets lifted by the lift portion, and supplies a sheet that comes into contact with the conveying member to a conveying path, and a detection portion which detects the sheet supplied by the sheet supply portion on the conveying path, and includes an acquisition step. The acquisition step includes acquiring, only when the stack of sheets is lifted by the lift portion, speed information related to a conveying speed of the sheet by the sheet supply portion using the detection portion.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a diagram showing an outer appearance of an image forming apparatus according to a first embodiment of the present disclosure;
Fig. 2 is a diagram showing an internal configuration of the image forming apparatus according to the first embodiment of the present disclosure;
Fig. 3 is a block diagram showing a system configuration of the image forming apparatus according to the first embodiment of the present disclosure;
Fig. 4 is a diagram showing a configuration of a sheet supply portion in the image forming apparatus according to the first embodiment of the present disclosure;
Fig. 5 is a flowchart showing an example of reset processing executed in the image forming apparatus according to the first embodiment of the present disclosure;
Fig. 6 is a flowchart showing an example of first sheet feed processing executed in the image forming apparatus according to the first embodiment of the present disclosure;
Fig. 7 is a flowchart showing an example of speed information acquisition processing executed in the image forming apparatus according to the first embodiment of the present disclosure;
Fig. 8 is a block diagram showing a system configuration of an image forming apparatus according to a second embodiment of the present disclosure;
Fig. 9 is a flowchart showing an example of second sheet feed processing executed in the image forming apparatus according to the second embodiment of the present disclosure;
Fig. 10 is a block diagram showing a system configuration of an image forming apparatus according to a third embodiment of the present disclosure;
Fig. 11 is a diagram showing a configuration of a sheet supply portion in the image forming apparatus according to the third embodiment of the present disclosure;
Fig. 12 is a flowchart showing an example of third sheet feed processing executed in the image forming apparatus according to the third embodiment of the present disclosure;
Fig. 13 is a flowchart showing an example of conveying amount acquisition processing executed in the image forming apparatus according to the third embodiment of the present disclosure;
Fig. 14 is a diagram showing an example of a setting failure state;
Fig. 15 is a diagram showing an example of the setting failure state; and
Fig. 16 is a diagram showing the configuration of the sheet supply portion in the image forming apparatus according to the first embodiment of the present disclosure.

### DETAILED DESCRIPTION

Hereinafter, embodiments of the present disclosure will be described with reference to the attached drawings. It is noted that the following embodiments are each an example of embodying the present disclosure and do not limit the technical scope of the present disclosure.

### [First embodiment]

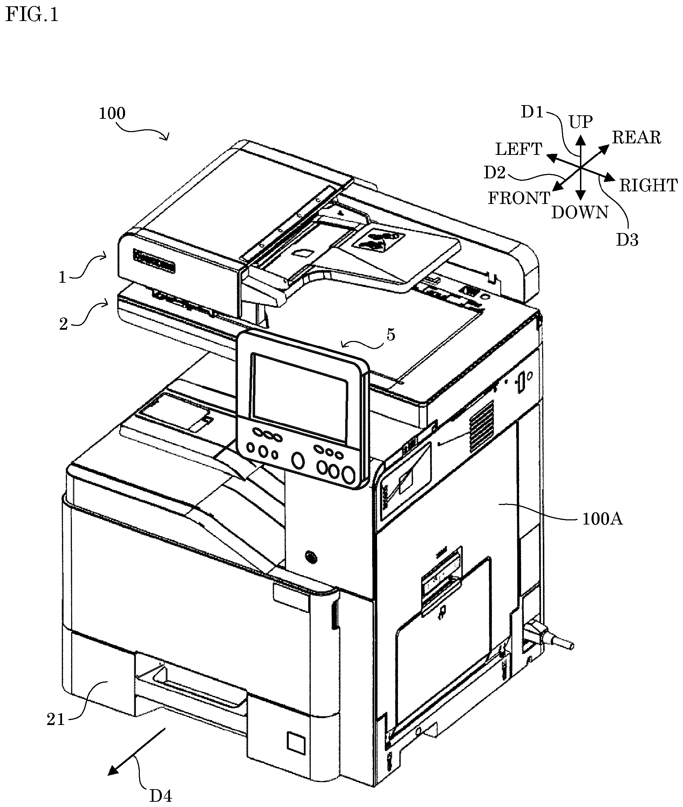

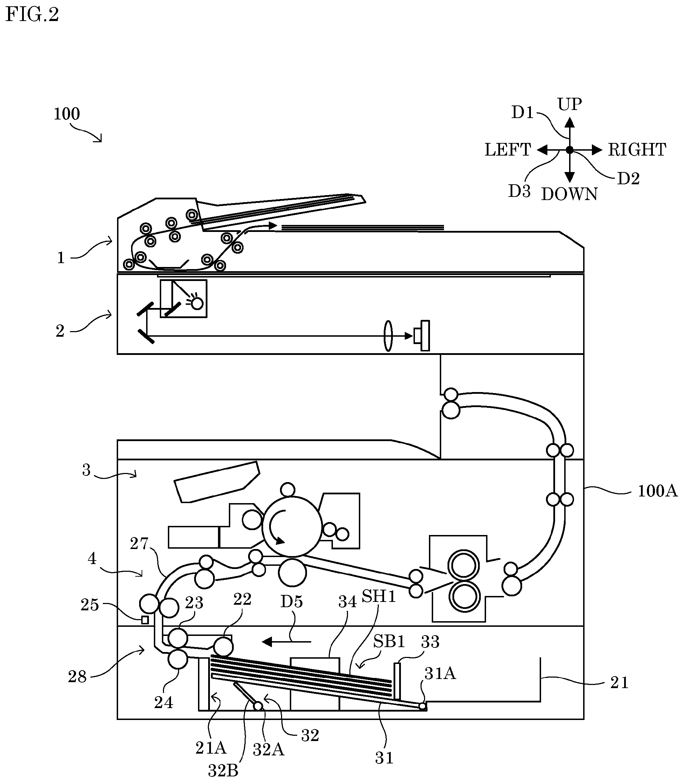

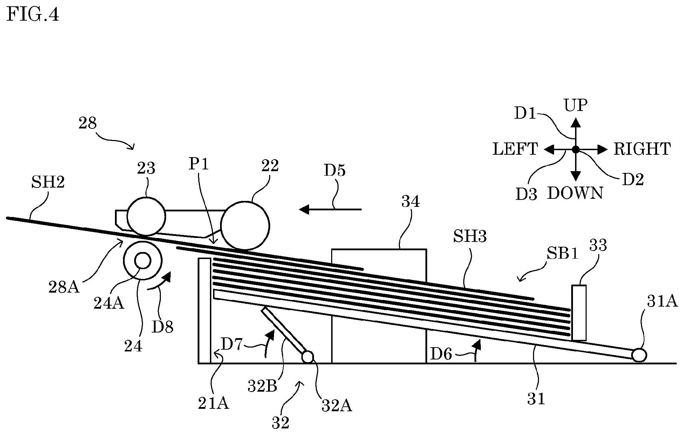

First, a configuration of an image forming apparatus 100 according to a first embodiment of the present disclosure will be described with reference to Fig. 1 to Fig. 4. Herein, Fig. 1 is a perspective view showing an outer appearance of the image forming apparatus 100. Further, Fig. 2 is a cross-sectional view showing an internal configuration of the image forming apparatus 100. Furthermore, Fig. 4 is an enlarged view of a sheet supply portion 28 shown in Fig. 2.

It is noted that for convenience of descriptions, a vertical direction in a state where the image forming apparatus 100 is installed in a usable state (a state shown in Fig. 1) is defined as an up-down direction D1. In addition, a front-rear direction D2 is defined with a surface of the image forming apparatus 100 on a near left side of a sheet surface shown in Fig. 1 being a front surface (front side). In addition, a left-right direction D3 is defined using the front surface of the image forming apparatus 100 in the installed state as a reference.

The image forming apparatus 100 is a multifunction peripheral having a plurality of functions such as a scanning function, a printing function, a facsimile function, and a copying function. It is noted that the present disclosure may also be applied to image forming apparatuses such as a printer, a facsimile apparatus, and a copying machine.

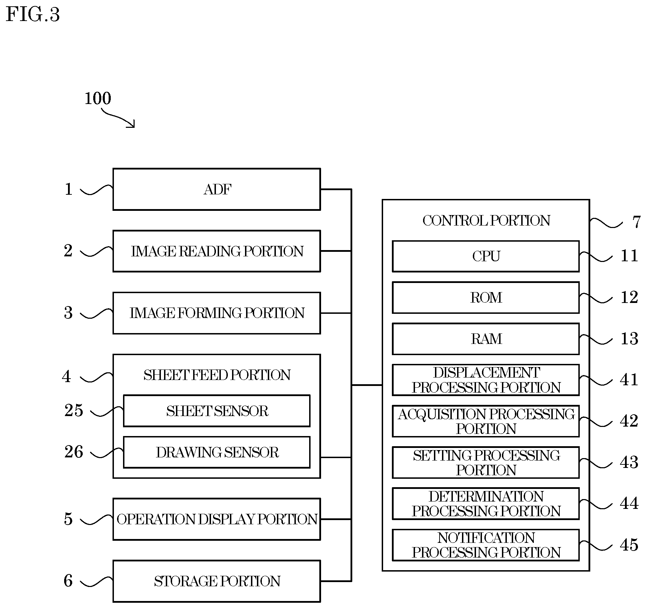

As shown in Fig. 3, the image forming apparatus 100 includes an ADF (Auto Document Feeder) 1, an image reading portion 2, an image forming portion 3, a sheet feed portion 4, an operation display portion 5, a storage portion 6, and a control portion 7.

The image forming portion 3, the sheet feed portion 4, the storage portion 6, and the control portion 7 are housed in a housing 100A (see Fig. 1 and Fig. 2) of the image forming apparatus 100. The housing 100A is formed in a substantially rectangular parallelepiped shape. The ADF 1 and the image reading portion 2 are provided on an upper side of the housing 100A (see Fig. 1 and Fig. 2). The operation display portion 5 is provided on a front side of the housing 100A (see Fig. 1).

The ADF 1 conveys a document sheet from which an image is to be read by the image reading portion 2. The ADF 1 includes a document sheet setting portion, a plurality of conveying rollers, a document sheet holder, and a sheet discharge portion.

The image reading portion 2 reads an image of a document sheet. That is, the image reading portion 2 realizes the scanning function. The image reading portion 2 includes a document sheet table, a light source, a plurality of mirrors, an optical lens, and a CCD (Charge Coupled Device).

The image forming portion 3 forms an image that is based on image data on a sheet SH1 (see Fig. 2) supplied from the sheet feed portion 4. That is, the image forming portion 3 realizes the printing function. Specifically, the image forming portion 3 forms an image using electrophotography. The image forming portion 3 includes a photoconductor drum, a charging device, a laser scanning unit (LSU), a developing device, a transfer device, a cleaning device, and a fixing device.

The operation display portion 5 is a user interface of the image forming apparatus 100. The operation display portion 5 includes a display portion and an operation portion. The display portion displays various types of information in response to control instructions from the control portion 7. For example, the display portion is a flat panel display such as a liquid crystal display. The operation portion is used to input various types of information to the control portion 7 according to user operations. For example, the operation portion includes an operation key and a touch panel.

The storage portion 6 is a nonvolatile storage device. For example, the storage portion 6 is a nonvolatile memory such as a flash memory.

The control portion 7 collectively controls the image forming apparatus 100. As shown in Fig. 3, the control portion 7 includes a CPU 11, a ROM 12, and a RAM 13. The CPU 11 is a processor that executes various types of arithmetic processing. The ROM 12 is a nonvolatile storage device in which information such as control programs for causing the CPU 11 to execute various types of processing is stored in advance. The RAM 13 is a volatile or nonvolatile storage device that is used as a temporary storage memory (working area) for the various types of processing to be executed by the CPU 11. In the control portion 7, the CPU 11 executes the various control programs stored in advance in the ROM 12. Thus, the control portion 7 collectively controls the image forming apparatus 100. It is noted that the control portion 7 may be constituted of an electronic circuit such as an integrated circuit (ASIC). Alternatively, the control portion 7 may be a control portion provided separately from a main control portion that collectively controls the image forming apparatus 100.

The sheet feed portion 4 supplies the sheet SH1 (see Fig. 2) to the image forming portion 3.

As shown in Fig. 2 and Fig. 3, the sheet feed portion 4 includes a sheet feed cassette 21, a pickup roller 22, a sheet feed roller 23, a separation roller 24, a sheet sensor 25, a drawing sensor 26, and a conveying path 27.

A stack of sheets SB1 (see Fig. 2) is placed in the sheet feed cassette 21. For example, the stack of sheets SB1 including the sheets SH1 such as paper, coated paper, postcards, envelopes, and OHP sheets is placed in the sheet feed cassette 21. As shown in Fig. 1 and Fig. 2, the sheet feed cassette 21 is provided at a bottom portion of the housing 100A. In addition, the sheet feed cassette 21 is provided so as to be capable of being drawn out from the housing 100A in a drawing direction D4 (see Fig. 1) along the front-rear direction D2. The sheet feed cassette 21 stores the stack of sheets SB1. The sheet feed cassette 21 is detachably provided in the housing 100A. The sheet feed cassette 21 is an example of a sheet storing portion according to the present disclosure.

As shown in Fig. 2, the sheet feed cassette 21 includes a lift plate 31, a lifting and lowering mechanism 32, an end cursor 33, and a pair of side cursors 34.

The lift plate 31 lifts up the stack of sheets SB1 (see Fig. 2) placed in the sheet feed cassette 21. The lift plate 31 is a flat plate-like member provided at the bottom portion of the sheet feed cassette 21. The stack of sheets SB1 is placed on an upper surface of the lift plate 31. The lift plate 31 is provided to be rotatable about a rotation shaft 31A (see Fig. 2) extending in the front-rear direction D2. Specifically, a right end portion of the lift plate 31 is supported rotatably about the rotation shaft 31A. The lift plate 31 is an example of a lift portion according to the present disclosure.

The lifting and lowering mechanism 32 lifts and lowers the lift plate 31. As shown in Fig. 2, the lifting and lowering mechanism 32 includes a rotation shaft 32A and a push-up plate 32B. The rotation shaft 32A extends in the front-rear direction D2. The push-up plate 32B is provided to extend from the rotation shaft 32A toward a direction orthogonal to the extension direction of the rotation shaft 32A. The push-up plate 32B is formed in a flat plate shape that is elongated in the front-rear direction D2. The rotation shaft 32A and the push-up plate 32B are provided below the lift plate 31.

A rear end portion of the rotation shaft 32A is coupled to a motor (not shown) provided outside the sheet feed cassette 21 via a joint portion (not shown) provided outside the sheet feed cassette 21. Upon receiving a rotational driving force supplied from the motor via the joint portion, the rotation shaft 32A and the push-up plate 32B rotate in a second rotation direction D7 shown in Fig. 4. When the rotation shaft 32A and the push-up plate 32B rotate in the second rotation direction D7, the lift plate 31 is pushed up by the push-up plate 32B to thus rotate in a first rotation direction D6 (see Fig. 4) shown in Fig. 4. Thus, the stack of sheets SB1 placed on the upper surface of the lift plate 31 is lifted upwardly.

The joint portion is restricted from rotating in a direction opposite to the second rotation direction D7. For example, the joint portion includes a ratchet mechanism that restricts the joint portion from rotating in the direction opposite to the second rotation direction D7. By restricting the joint portion from rotating in the direction opposite to the second rotation direction D7, the rotation of the rotation shaft 32A engaged with the joint portion in the direction opposite to the second rotation direction D7 is also restricted. This restricts lowering of the lift plate 31 by its own weight.

When the sheet feed cassette 21 is drawn out from the housing 100A in the drawing direction D4, the engagement between the rotation shaft 32A and the joint portion is released. Thus, the restriction of the rotation of the rotation shaft 32A and the push-up plate 32B in the direction opposite to the second rotation direction D7 by the joint portion is released, and the lift plate 31 is lowered by its own weight.

The end cursor 33 is provided so as to be movable along a sheet conveying direction D5 shown in Fig. 4. The end cursor 33 causes the stack of sheets SB1 placed in the sheet feed cassette 21 to abut against a wall surface 21A (see Fig. 4) of the sheet feed cassette 21 on a downstream side of the sheet conveying direction D5, to adjust a position of the stack of sheets SB1 in the sheet conveying direction D5. The pair of side cursors 34 are provided to interlock with each other so as to approach or move away from each other along a width direction of the sheet SH1 orthogonal to the sheet conveying direction D5. The pair of side cursors 34 sandwich and hold the stack of sheets SB1 placed in the sheet feed cassette 21 to adjust the position of the sheets SH1 in the width direction.

As shown in Fig. 2 and Fig. 4, the pickup roller 22 is provided above the lift plate 31. The pickup roller 22 rotates while being in contact with the upper surface of the stack of sheets SB1 lifted by the lift plate 31, thereby conveying an uppermost sheet SH1 (see Fig. 2) in the stack of sheets SB1 to a separation portion 28A (see Fig. 4). Herein, the separation portion 28A is a nip portion formed between the sheet feed roller 23 and the separation roller 24. The pickup roller 22 conveys the sheet SH1 in the sheet conveying direction D5 (see Fig. 4). The sheet conveying direction D5 is a direction orthogonal to the front-rear direction D2. The pickup roller 22 is an example of a conveying member according to the present disclosure.

Specifically, the pickup roller 22 is provided to be rotatable about a shaft extending in the front-rear direction D2. The pickup roller 22 rotates by receiving a rotational driving force supplied from a motor (not shown) while being in contact with the upper surface of the sheet SH1. Thus, the pickup roller 22 applies a conveying force in the sheet conveying direction D5 to the sheet SH1 in contact with the pickup roller 22.

The pickup roller 22, the sheet feed roller 23, and the separation roller 24 constitute the sheet supply portion 28 (see Fig. 2 and Fig. 4) that supplies the sheet SH1 that comes into contact with the pickup roller 22 to the conveying path 27 (see Fig. 2). The conveying path 27 is a movement path of the sheet SH1 that is provided from the sheet supply portion 28 to the image forming portion 3.

As shown in Fig. 2 and Fig. 4, the sheet feed roller 23 is provided more on the downstream side of the sheet conveying direction D5 than the pickup roller 22. The sheet feed roller 23 comes into contact with the upper surface of the sheet SH1 (see Fig. 2) conveyed by the pickup roller 22 and conveys the sheet SH1 beyond a detection position of the sheet SH1 by the sheet sensor 25 (see Fig. 2). The sheet feed roller 23 conveys the sheet SH1 in the sheet conveying direction D5.

Specifically, the sheet feed roller 23 is provided to be rotatable about a shaft extending in the front-rear direction D2. The sheet feed roller 23 rotates by receiving a rotational driving force supplied from a motor (not shown) while being in contact with the upper surface of the sheet SH1. Thus, the sheet feed roller 23 applies a conveying force in the sheet conveying direction D5 to the sheet SH1 in contact with the sheet feed roller 23.

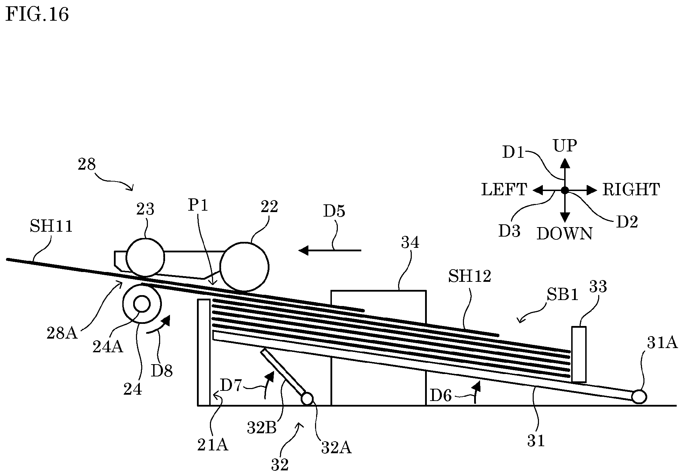

As shown in Fig. 2 and Fig. 4, the separation roller 24 is provided below the sheet feed roller 23 while opposing the sheet feed roller 23. The separation roller 24 forms the separation portion 28A (see Fig. 4) with the sheet feed roller 23. The separation portion 28A separates, from a sheet SH11 (see Fig. 16) conveyed by the pickup roller 22, another sheet SH12 accompanying the sheet SH11 (see Fig. 16).

Specifically, the separation roller 24 includes a shaft portion 24A (see Fig. 4) extending in the front-rear direction D2. The separation roller 24 is fixed to the shaft portion 24A and rotates integrally with the shaft portion 24A. The shaft portion 24A is rotatably supported by a bearing portion (not shown) provided inside the housing 100A. The bearing portion is biased toward the sheet feed roller 23 side by a bias member (not shown) such as a coil spring provided inside the housing 100A. Thus, the separation roller 24 is biased toward the sheet feed roller 23, and a nip portion, that is, the separation portion 28A that nips the sheet SH1 between the separation roller 24 and the sheet feed roller 23 is formed.

When only one sheet SH1 is present at the separation portion 28A, the separation roller 24 rotates by being driven in a rotation direction D8 shown in Fig. 4 by a force transmitted from the sheet SH1 conveyed by the sheet feed roller 23. Further, when the sheets SH11 and SH12 (see Fig. 16) are present at the separation portion 28A, the rotation of the separation roller 24 in the rotation direction D8 is restricted. For example, the sheet supply portion 28 includes a torque limiter that restricts the rotation of the shaft portion 24A in the rotation direction D8 when a torque along the rotation direction D8, that is transmitted to the shaft portion 24A, is a predetermined value or more. By restricting the rotation of the separation roller 24 in the rotation direction D8 when the sheets SH11 and SH12 are present at the separation portion 28A, the movement of the sheet SH12 in contact with the separation roller 24 in the sheet conveying direction D5 is restricted by contact friction with the separation roller 24. Thus, the another sheet SH12 that moves together with the sheet SH11 along with the conveyance of the sheet SH11 in contact with the pickup roller 22 is separated from the sheet SH11.

As shown in Fig. 2, the sheet sensor 25 is provided more on the downstream side of the sheet conveying direction D5 than the sheet feed roller 23. The sheet sensor 25 detects the sheet SH1 supplied by the sheet supply portion 28 on the conveying path 27. For example, the sheet sensor 25 includes an actuator that is moved by coming into contact with the sheet SH1 and a reflective or transmissive optical sensor that detects a movement of the actuator. In the image forming apparatus 100, a supply timing of the next sheet SH1 by the sheet supply portion 28 is determined based on a detection timing of the sheet SH1 by the sheet sensor 25. The sheet sensor 25 is an example of a detection portion according to the present disclosure.

The drawing sensor 26 detects drawing out of the sheet feed cassette 21 from the housing 100A. For example, the drawing sensor 26 includes a push switch that changes from an on state to an off state in accordance with the drawing out of the sheet feed cassette 21 from the housing 100A.

Incidentally, there is known a sheet conveying device which measures a conveying speed of the sheet SH1 by the sheet supply portion 28 using the sheet sensor 25.

Herein, in the image forming apparatus 100, a sheet SH3 (see Fig. 4) below the sheet SH2 (see Fig. 4) to be conveyed by the pickup roller 22 may be pulled by the sheet SH2 to be fed out from the stack of sheets SB1 (see Fig. 4). That is, the sheet SH3 to be conveyed next by the pickup roller 22 may move toward the downstream side of the sheet conveying direction D5 from a reference position P1 (see Fig. 4). The reference position P1 is a position at which a tip end of the uppermost sheet SH1 in the stack of sheets SB1 is arranged when the stack of sheets SB1 is lifted by the lift plate 31.

When the sheet sensor 25 is used to measure the conveying speed of the sheet SH1 by the sheet supply portion 28 in a state where the sheet SH1 is fed out from the stack of sheets SB1, acquisition accuracy of the conveying speed is lowered.

In contrast, in the image forming apparatus 100 according to the first embodiment of the present disclosure, it is possible to suppress lowering of the acquisition accuracy of the conveying speed of the sheet SH1 as will be described below.

### [Configuration of control portion 7]

Next, a configuration of the control portion 7 will be described with reference to Fig. 3.

As shown in Fig. 3, the control portion 7 includes a displacement processing portion 41, an acquisition processing portion 42, a setting processing portion 43, a determination processing portion 44, and a notification processing portion 45. A device including the sheet feed portion 4 and the control portion 7 is an example of a sheet conveying device according to the present disclosure.

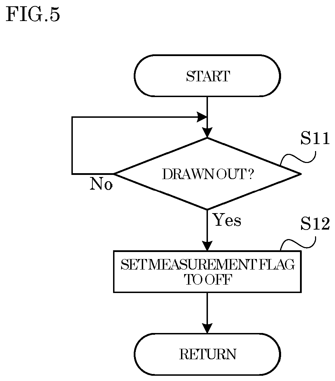

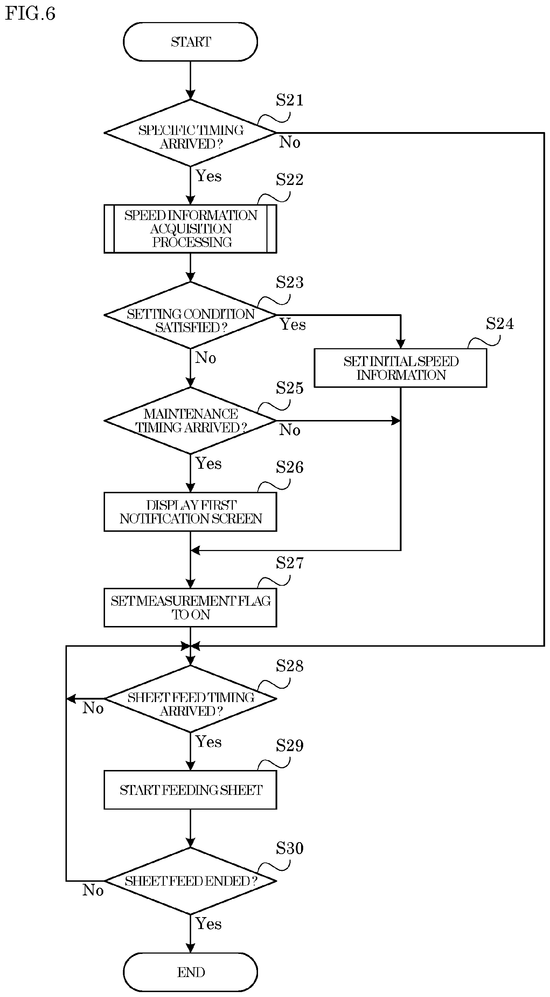

Specifically, a sheet feed control program for causing the CPU 11 of the control portion 7 to execute reset processing (see flowchart shown in Fig. 5) and first sheet feed processing (see flowchart shown in Fig. 6) to be described later is stored in advance in the ROM 12 of the control portion 7. It is noted that the sheet feed control program may be recorded on a computer-readable recording medium such as a CD, a DVD, and a flash memory so as to be read from the recording medium to be installed in a storage device such as the storage portion 6.

Then, the control portion 7 uses the CPU 11 to execute the sheet feed control program stored in the ROM 12, to thus function as the respective processing portions described above.

It is noted that some or all of the processing portions included in the control portion 7 may be constituted of electronic circuits. Alternatively, the sheet feed control program may be a program for causing a plurality of processors to function as the respective processing portions included in the control portion 7.

When a predetermined specific timing arrives, the displacement processing portion 41 displaces the stack of sheets SB1 placed in the sheet feed cassette 21 to a position at which the stack of sheets SB1 comes into contact with the pickup roller 22 using the lift plate 31.

For example, the specific timing is a first execution timing of image forming processing after the sheet feed cassette 21 is drawn out from the housing 100A. It is noted that the image forming processing is processing of forming an image on the sheet SH1 supplied by the sheet feed portion 4 using the image forming portion 3.

The acquisition processing portion 42 acquires speed information related to the conveying speed of the sheet SH1 by the sheet supply portion 28 using the sheet sensor 25 only when the stack of sheets SB1 is lifted by the lift plate 31.

Herein, the speed information is the conveying speed of the sheet SH1 by the sheet supply portion 28. It is noted that the speed information may be an elapsed time from the start of supply of the sheet SH1 by the sheet supply portion 28 to the time when the sheet SH1 is detected by the sheet sensor 25.

Specifically, the acquisition processing portion 42 measures the elapsed time from the start of supply of the sheet SH1 by the sheet supply portion 28 to the time when the sheet SH1 is detected by the sheet sensor 25, and calculates the conveying speed of the sheet SH1 by the sheet supply portion 28 based on the measurement result and a specific conveying distance from the reference position P1 (see Fig. 4) to the detection position. The specific conveying distance is a distance from the reference position P1 to the detection position on the conveying path of the sheet SH1. It is noted that the specific conveying distance only needs to be stored in advance in the storage portion 6 or the ROM 12.

For example, the acquisition processing portion 42 stores the acquired speed information in a predetermined second storage area of the storage portion 6 in association with an acquired date and time of the speed information and a type of the sheet SH1 conveyed at the time of the acquisition of the speed information. It is noted that in the present specification, the "type of the sheet SH1" refers to a group identified by either one or both of a size and material of the sheet SH1.

For example, the acquisition processing portion 42 acquires the speed information when the lift of the stack of sheets SB1 by the lift plate 31 is the first lift after the sheet feed cassette 21 is attached to the housing 100A.

For example, the acquisition processing portion 42 acquires the speed information every time the stack of sheets SB1 is lifted by the lift plate 31.

For example, the acquisition processing portion 42 acquires the speed information at a time when the sheet SH1 is supplied for the first time after the stack of sheets SB1 is lifted by the lift plate 31.

It is noted that the acquisition processing portion 42 may acquire the speed information at a time when a second or subsequent sheet SH1 is supplied after the stack of sheets SB1 is lifted by the lift plate 31.

The setting processing portion 43 sets initial speed information based on an acquisition result obtained by the acquisition processing portion 42.

For example, the setting processing portion 43 sets the initial speed information when the speed information is acquired by the acquisition processing portion 42 and a predetermined setting condition is satisfied.

For example, the setting condition is a condition in which a cumulative number of times of supply of the sheet SH1 by the sheet supply portion 28 is smaller than a predetermined reference number of times. It is noted that the cumulative number of times of supply of the sheet SH1 by the sheet supply portion 28 only needs to be counted up by the control portion 7 every time the sheet SH1 is supplied by the sheet supply portion 28. Further, the cumulative number of times of supply of the sheet SH1 by the sheet supply portion 28 only needs to be reset in accordance with a predetermined operation on the operation display portion 5 during maintenance of the sheet supply portion 28, or the like. Furthermore, contents stored in the second storage area of the storage portion 6 only need to be deleted along with the reset of the cumulative number of times of supply of the sheet SH1 by the sheet supply portion 28.

For example, the setting processing portion 43 sets the initial speed information for each type of the sheet SH1.

For example, when the speed information is acquired by the acquisition processing portion 42 and the setting condition is satisfied, the setting processing portion 43 sets an average value of the speed information whose associated type of the sheet SH1 is common to the speed information that has been stored last out of the speed information stored in the second storage area of the storage portion 6, as the initial speed information corresponding to the type of the sheet SH1.

It is noted that the setting condition may alternatively be a condition in which the cumulative number of times of supply of the sheet SH1 by the sheet supply portion 28 is smaller than the reference number of times and the initial speed information corresponding to the type of the sheet SH1 conveyed at the time of the acquisition of the speed information by the acquisition processing portion 42 is unset. In this case, when the speed information is acquired by the acquisition processing portion 42 and the setting condition is satisfied, the setting processing portion 43 only needs to set the acquired speed information as the initial speed information corresponding to the type of the sheet SH1 conveyed at the time of the acquisition of the speed information.

Further, the initial speed information does not need to be set for each type of the sheet SH1. In this case, when the speed information is acquired by the acquisition processing portion 42 and the setting condition is satisfied, the setting processing portion 43 only needs to set an average value of the speed information stored in the second storage area of the storage portion 6 or the speed information that has been stored last in the second storage area as the initial speed information.

The determination processing portion 44 determines whether or not a maintenance timing for the sheet supply portion 28 has arrived based on the acquisition result obtained by the acquisition processing portion 42.

Specifically, the determination processing portion 44 determines whether or not the maintenance timing for the sheet supply portion 28 has arrived based on the speed information acquired after setting the initial speed information and the initial speed information.

More specifically, the determination processing portion 44 determines whether or not the maintenance timing for the sheet supply portion 28 has arrived based on the initial speed information corresponding to the type of the sheet SH1 conveyed at the time of the acquisition of the speed information by the acquisition processing portion 42 out of the pieces of initial speed information respectively corresponding to the types of sheets SH1.

For example, when the speed information is acquired by the acquisition processing portion 42 and a difference between the acquired speed information and the initial speed information corresponding to the type of the sheet SH1 conveyed at the time of the acquisition of the speed information exceeds a predetermined first threshold value, the determination processing portion 44 determines that the maintenance timing for the sheet supply portion 28 has arrived.

When it is determined by the determination processing portion 44 that the maintenance timing for the sheet supply portion 28 has arrived, the notification processing portion 45 notifies to that effect.

For example, when it is determined by the determination processing portion 44 that the maintenance timing for the sheet supply portion 28 has arrived, the notification processing portion 45 causes the operation display portion 5 to display a first notification screen that includes a message notifying to that effect.

### [Reset processing]

Hereinafter, exemplary procedures of the reset processing executed by the control portion 7 in the image forming apparatus 100 will be described with reference to Fig. 5. Herein, Step S11, Step S12, ... represent numbers of processing procedures (steps) executed by the control portion 7.

### <Step S11>

First, in Step S11, the control portion 7 determines whether or not the sheet feed cassette 21 has been drawn out from the housing 100A.

Specifically, when a detection signal indicating that the sheet feed cassette 21 has been drawn out is output from the drawing sensor 26, the control portion 7 determines that the sheet feed cassette 21 has been drawn out from the housing 100A.

Herein, when determining that the sheet feed cassette 21 has been drawn out from the housing 100A (Yes in S11), the control portion 7 shifts the processing to Step S12. On the other hand, when determining that the sheet feed cassette 21 has not been drawn out from the housing 100A (No in S11), the control portion 7 waits for the sheet feed cassette 21 to be drawn out from the housing 100A in Step S11.

When the sheet feed cassette 21 is drawn out from the housing 100A, the engagement between the rotation shaft 32A and the joint portion is released, and the lift plate 31 descends by its own weight.

### <Step S12>

In Step S12, the control portion 7 sets a predetermined measurement flag to OFF.

Specifically, in the image forming apparatus 100, a first storage area used for setting the measurement flag is provided in advance in the storage portion 6. A value of "0" or "1" is stored in the first storage area. The control portion 7 stores the value of "0" in the first storage area to set the measurement flag to OFF.

### [First sheet feed processing]

Next, with reference to Fig. 6, exemplary procedures of first sheet feed processing executed by the control portion 7 in the image forming apparatus 100 will be described. It is noted that the first sheet feed processing is executed when the execution timing of the image forming processing arrives.

### <Step S21>

First, in Step S21, the control portion 7 determines whether or not the specific timing has arrived.

Specifically, the control portion 7 determines that the specific timing has arrived when the measurement flag is set to OFF.

Herein, when determining that the specific timing has arrived (Yes in S21), the control portion 7 shifts the processing to Step S22. On the other hand, when determining that the specific timing has not arrived (No in S21), the control portion 7 shifts the processing to Step S28.

### <Step S22>

In Step S22, the control portion 7 executes speed information acquisition processing to be described below.

### [Speed information acquisition processing]

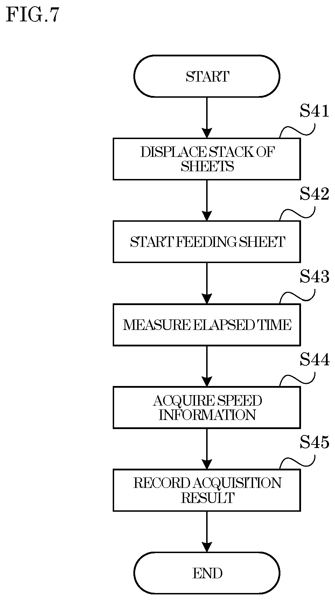

Herein, exemplary procedures of the speed information acquisition processing executed in Step S22 in the first sheet feed processing will be described with reference to Fig. 7.

### <Step S41>

First, in Step S41, the control portion 7 uses the lift plate 31 to displace the stack of sheets SB1 placed in the sheet feed cassette 21 to a position at which the stack of sheets SB1 comes into contact with the pickup roller 22. The processing of Step S41 is executed by the displacement processing portion 41 of the control portion 7.

### <Step S42>

In Step S42, the control portion 7 causes the sheet supply portion 28 to start supplying the sheet SH1.

An image that is based on image data is formed on the sheet SH1 fed by the processing of Step S42 by the image forming portion 3.

### <Step S43>

In Step S43, the control portion 7 measures an elapsed time from a start of supply of the sheet SH1 by the sheet supply portion 28 to a time when the sheet SH1 is detected by the sheet sensor 25.

Herein, the sheet SH1 to be fed in the processing of Step S43 is the first sheet SH1 that is conveyed after the sheet feed cassette 21 is drawn out from the housing 100A and the stack of sheets SB1 is set in the sheet feed cassette 21. In other words, the tip end of the sheet SH1 to be fed in the processing of Step S43 is not positioned more on the downstream side of the sheet conveying direction D5 than the reference position P1 (see Fig. 4). Therefore, the acquisition processing portion 42 can more accurately calculate the conveying speed of the sheet SH1 by the sheet supply portion 28 than in the configuration in which the acquisition processing portion 42 measures the elapsed time from the start of supply of the sheet SH1 by the sheet supply portion 28 to the time when the sheet SH1 is detected by the sheet sensor 25 at the time when the second or subsequent sheet SH1 is supplied after the stack of sheets SB1 is lifted by the lift plate 31.

### <Step S44>

In Step S44, the control portion 7 acquires the speed information. The processing of Step S44 is an example of an acquisition step according to the present disclosure and is executed by the acquisition processing portion 42 of the control portion 7.

Specifically, the control portion 7 calculates the conveying speed of the sheet SH1 by the sheet supply portion 28 based on the measurement result obtained by the processing of Step S43 and the specific conveying distance.

### <Step S45>

In Step S45, the control portion 7 records the speed information acquired by the processing of Step S44.

Specifically, the control portion 7 stores the speed information acquired by the processing of Step S44 in the second storage area of the storage portion 6 in association with the acquired date and time of the speed information and the type of the sheet SH1 conveyed at the time of the acquisition of the speed information.

With this, the description of the speed information acquisition processing ends, and the description of the first sheet feed processing will be resumed.

### <Step S23>

In Step S23, the control portion 7 determines whether or not the setting condition is satisfied.

Specifically, the control portion 7 determines that the setting condition is satisfied when the cumulative number of times of supply of the sheet SH1 by the sheet supply portion 28 is smaller than the reference number of times.

Herein, when determining that the setting condition is satisfied (Yes in S23), the control portion 7 shifts the processing to Step S24. On the other hand, when determining that the setting condition is not satisfied (No in S23), the control portion 7 shifts the processing to Step S25.

### <Step S24>

In Step S24, the control portion 7 sets the initial speed information. The processing of Step S24 is executed by the setting processing portion 43 of the control portion 7.

Specifically, the control portion 7 sets the average value of the speed information whose associated type of the sheet SH1 is common to the speed information that has been stored last out of the speed information stored in the second storage area of the storage portion 6, as the initial speed information corresponding to the type of the sheet SH1.

### <Step S25>

In Step S25, the control portion 7 determines whether or not the maintenance timing for the sheet supply portion 28 has arrived. The processing of Step S25 is executed by the determination processing portion 44 of the control portion 7.

Specifically, the control portion 7 determines that the maintenance timing for the sheet supply portion 28 has arrived when the difference between the speed information that has been stored last out of the speed information stored in the second storage area of the storage portion 6 and the initial speed information corresponding to the type of the sheet SH1 conveyed at the time of the acquisition of the speed information exceeds the first threshold value.

It is noted that when the initial speed information corresponding to the type of the sheet SH1 conveyed at the time of the acquisition of the last speed information is unset, the control portion 7 only needs to determine whether or not the maintenance timing for the sheet supply portion 28 has arrived by using an initial value corresponding to the type of the sheet SH1 conveyed at the time of the acquisition of the last speed information out of the initial values that have been determined in advance for the respective types of the sheets SH1.

Herein, when determining that the maintenance timing for the sheet supply portion 28 has arrived (Yes in S25), the control portion 7 shifts the processing to Step S26. On the other hand, when determining that the maintenance timing for the sheet supply portion 28 has not arrived (No in S25), the control portion 7 shifts the processing to Step S27.

### <Step S26>

In Step S26, the control portion 7 causes the operation display portion 5 to display the first notification screen. The processing of Step S26 is executed by the notification processing portion 45 of the control portion 7.

Thus, it is possible for the user of the image forming apparatus 100 to recognize that the maintenance timing for the sheet supply portion 28 has arrived. It is noted that the control portion 7 may stop the conveyance of the sheet SH1 until a user operation is accepted in the operation display portion 5.

### <Step S27>

In Step S27, the control portion 7 sets the measurement flag to ON.

Specifically, the control portion 7 sets the measurement flag to ON by storing a value of "1" in the first storage area. Thus, the processing from Step S22 to Step S27 is omitted until the sheet feed cassette 21 is drawn out from the housing 100A.

### <Step S28>

In Step S28, the control portion 7 determines whether or not a sheet feed timing of the sheet SH1 has arrived.

Specifically, when the sheet SH1 has not been fed after the start of the first sheet feed processing, the control portion 7 determines that the sheet feed timing has arrived at the start of the processing of Step S28. Further, when the sheet SH1 has been fed after the start of the first sheet feed processing, the control portion 7 determines that the sheet feed timing has arrived when a predetermined time has elapsed since the last detection of the sheet SH1 by the sheet sensor 25.

Herein, when determining that the sheet feed timing has arrived (Yes in S28), the control portion 7 shifts the processing to Step S29. On the other hand, when determining that the sheet feed timing has not arrived (No in S28), the control portion 7 waits for the sheet feed timing to arrive in Step S28.

### <Step S29>

In Step S29, the control portion 7 causes the sheet supply portion 28 to start supplying the sheet SH1.

An image that is based on image data is formed on the sheet SH1 fed by the processing of Step S29 by the image forming portion 3.

### <Step S30>

In Step S30, the control portion 7 determines whether or not the feeding of the sheet SH1 is ended.

Specifically, the control portion 7 determines that the feeding of the sheet SH1 is ended when all of the sheets SH1 on which images are to be formed by the image forming processing have been fed.

Herein, when determining that the feeding of the sheet SH1 is ended (Yes in S30), the control portion 7 ends the first sheet feed processing. On the other hand, when determining that the feeding of the sheet SH1 is not ended (No in S30), the control portion 7 shifts the processing to Step S28.

In this manner, in the image forming apparatus 100, the speed information is acquired only when the stack of sheets SB1 is lifted by the lift plate 31. Thus, it is possible to suppress lowering of the acquisition accuracy of the conveying speed of the sheet SH1 as compared to a configuration in which the acquisition timing of the speed information is not limited.

Furthermore, in the image forming apparatus 100, the initial speed information set for each type of the sheet SH1 is used to determine whether or not the maintenance timing for the sheet supply portion 28 has arrived. Thus, it is possible to more accurately detect the arrival of the maintenance timing for the sheet supply portion 28 than in a configuration in which common initial speed information is used for a plurality of types of sheets SH1.

It is noted that the lift plate 31 may be configured to descend every time the image forming processing ends. In this case, when the sheet SH1 fed out from the stack of sheets SB1 returns to the reference position P1 by its own weight, a reverse rotation of the pickup roller 22 and the sheet feed roller 23, or the like while the lift plate 31 descends, the specific timing may be the execution timing of the image forming processing.

Furthermore, the lift portion according to the present disclosure is not limited to a flat plate-like member and only needs to be a member including a support surface that supports a bottom surface of the stack of sheets SB1. In addition, the conveying member according to the present disclosure is not limited to a roller-type member and may alternatively be a belt-like member.

Moreover, the present disclosure may also be applied to an inkjet-type image forming apparatus.

Furthermore, the present disclosure may also be applied to the ADF 1.

Incidentally, in the image forming apparatus 100, the stack of sheets SB1 placed on the lift plate 31 may be in a setting failure state. For example, in the image forming apparatus 100, the stack of sheets SB1 placed on the lift plate 31 may not be aligned by the end cursor 33 and the pair of side cursors 34 used to align the stack of sheets SB1. When the stack of sheets SB1 placed on the lift plate 31 is in the setting failure state, problems such as a paper jam may occur. However, there has conventionally been no technology for determining whether or not the stack of sheets SB1 placed on the lift plate 31 is in the setting failure state.

In contrast, in an image forming apparatus 200 according to a second embodiment of the present disclosure, it is possible to determine whether or not the stack of sheets SB1 placed on the lift plate 31 is in the setting failure state as will be described below.

### [Second embodiment]

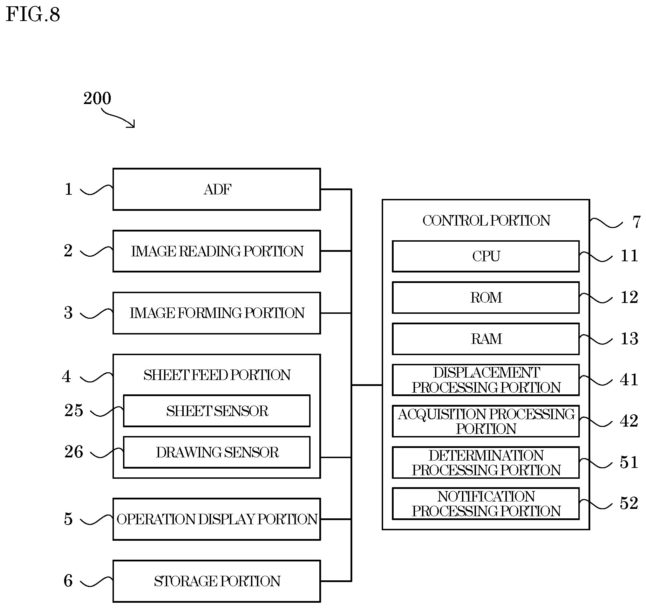

Hereinafter, a configuration of the image forming apparatus 200 according to the second embodiment of the present disclosure will be described with reference to Fig. 8.

The image forming apparatus 200 has the same configuration as the image forming apparatus 100 except that the configuration of the control portion 7 differs. Specifically, as shown in Fig. 3 and Fig. 8, the control portion 7 of the image forming apparatus 200 includes a determination processing portion 51 and a notification processing portion 52 in place of the setting processing portion 43, the determination processing portion 44, and the notification processing portion 45. Hereinafter, descriptions will only be given on portions of the configuration of the image forming apparatus 200 that are different from those of the image forming apparatus 100.

The determination processing portion 51 determines whether or not the stack of sheets SB1 is in the setting failure state based on the speed information acquired by the acquisition processing portion 42.

For example, the determination processing portion 51 determines whether or not the stack of sheets SB1 is in the setting failure state based on a plurality of pieces of successively-acquired speed information including the speed information that has been acquired last.

Further, the determination processing portion 51 determines whether or not the stack of sheets SB1 is in the setting failure state based on a plurality of pieces of speed information whose type of the sheet SH1 is common to the type of the sheet SH1 conveyed at the time of the acquisition of the speed information out of the plurality of pieces of speed information acquired by the acquisition processing portion 42.

For example, when the speed information is stored in the second storage area of the storage portion 6, the determination processing portion 51 specifies the plurality of pieces of speed information whose associated type of the sheet SH1 is common to the speed information that has been stored last out of the plurality of pieces of speed information stored in the second storage area excluding the speed information that has been stored last. Further, the determination processing portion 51 extracts a specific number of pieces of speed information from the plurality of specified pieces of speed information in a reverse chronological order regarding the storage timing. Then, the determination processing portion 51 determines that the stack of sheets SB1 is in the setting failure state when a difference between the average value of the specific number of pieces of speed information that have been extracted and the speed information that has been stored last in the second storage area exceeds a predetermined second threshold value. For example, the specific number is three. It is noted that the determination processing portion 51 may determine that the stack of sheets SB1 is in the setting failure state when a difference between the average value of all of the plurality of specified pieces of speed information and the speed information that has been stored last in the second storage area exceeds the second threshold value.

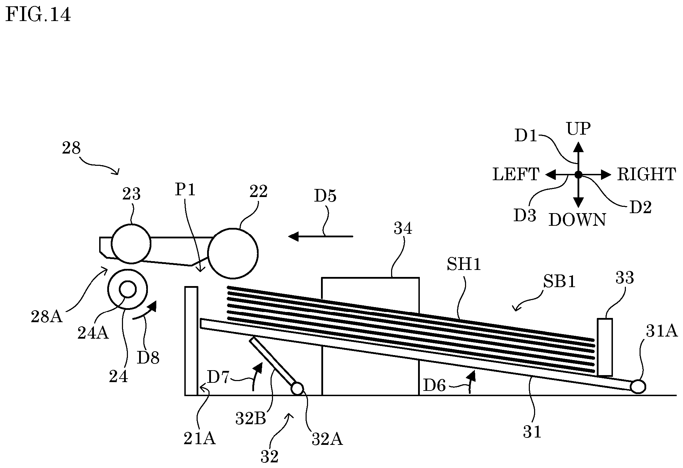

For example, when the stack of sheets SB1 is lifted by the lift plate 31 in a state where the stack of sheets SB1 is not tightly sandwiched between the wall surface 21A of the sheet feed cassette 21 (see Fig. 14) and the end cursor 33, the stack of sheets SB1 moves toward the end cursor 33 by its own weight. Thus, as shown in Fig. 14, the sheet feed position of the sheet SH1 by the sheet supply portion 28 moves more on the upstream side of the sheet conveying direction D5 than the reference position P1 (see Fig. 14). In other words, the speed information (conveying speed) to be acquired by the acquisition processing portion 42 decreases. By setting the second threshold value so as to be capable of detecting this decrease, it is possible to detect the misalignment, that is, the setting failure state of the stack of sheets SB1.

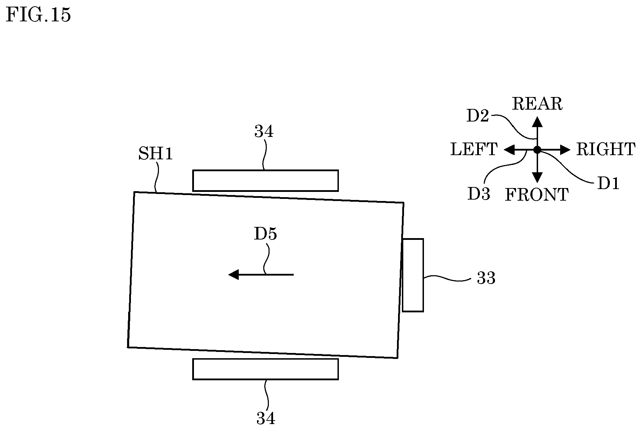

Further, when the stack of sheets SB1 is not tightly sandwiched between the pair of side cursors 34, the stack of sheets SB1 may be tilted with respect to the sheet conveying direction D5 as shown in Fig. 15. In this case, the sheet SH1 conveyed by the sheet supply portion 28 is skewed, and a conveying load increases. In other words, the speed information (conveying speed) to be acquired by the acquisition processing portion 42 decreases. By setting the second threshold value so as to be capable of detecting this decrease, it is possible to detect the misalignment, that is, the setting failure state of the stack of sheets SB1.

Furthermore, when the stack of sheets SB1 lifted by the lift plate 31 is not loosened, a frictional force between the sheets SH1 increases, making the pickup roller 22 more likely to slip. In other words, the speed information (conveying speed) to be acquired by the acquisition processing portion 42 decreases. By setting the second threshold value so as to be capable of detecting this decrease, it is possible to detect the unloosened state, that is, the setting failure state of the stack of sheets SB1.

When it is determined by the determination processing portion 51 that the stack of sheets SB1 is in the setting failure state, the notification processing portion 52 notifies to that effect.

For example, when it is determined by the determination processing portion 51 that the stack of sheets SB1 is in the setting failure state, the notification processing portion 52 causes the operation display portion 5 to display a second notification screen that includes a message notifying to that effect. For example, the second notification screen includes a message indicating that the stack of sheets SB1 may not be aligned or loosened.

### [Second sheet feed processing]

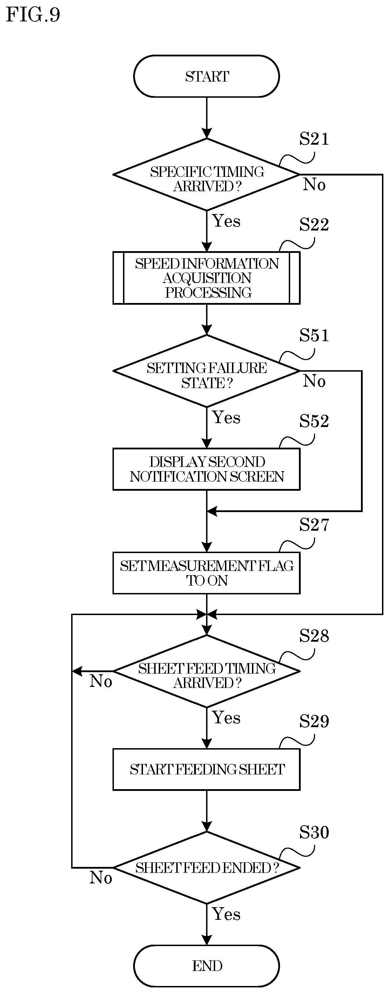

Next, exemplary procedures of second sheet feed processing executed by the control portion 7 in the image forming apparatus 200 will be described with reference to Fig. 9.

As shown in Fig. 6 and Fig. 9, the second sheet feed processing is the same as the first sheet feed processing except that processing of Step S51 and Step S52 is executed in place of the processing of Step S23 to Step S26. Hereinafter, descriptions will only be given on portions of the second sheet feed processing that are different from those of the first sheet feed processing.

### <Step S51>

In Step S51, the control portion 7 determines whether or not the stack of sheets SB1 is in the setting failure state. The processing of Step S51 is an example of a determination step according to the present disclosure and is executed by the determination processing portion 51 of the control portion 7.

Specifically, the control portion 7 specifies a plurality of pieces of speed information whose associated type of the sheet SH1 is common to the speed information that has been stored last out of the plurality of pieces of speed information stored in the second storage area of the storage portion 6 excluding the speed information that has been stored last in the second storage area of the storage portion 6. Further, the control portion 7 extracts a predetermined number of pieces of speed information from the plurality of specified pieces of speed information in a reverse chronological order regarding the storage timing. Then, the determination processing portion 51 determines that the stack of sheets SB1 is in the setting failure state when the difference between the average value of the plurality of extracted pieces of speed information and the speed information that has been stored last in the second storage area exceeds the second threshold value.

Herein, when determining that the stack of sheets SB1 is in the setting failure state (Yes in S51), the control portion 7 shifts the processing to Step S52. On the other hand, when determining that the stack of sheets SB1 is not in the setting failure state (No in S51), the control portion 7 shifts the processing to Step S27.

### <Step S52>

In Step S52, the control portion 7 causes the operation display portion 5 to display the second notification screen. The processing of Step S52 is executed by the notification processing portion 52 of the control portion 7.

Thus, it becomes possible for the user of the image forming apparatus 200 to recognize that the stack of sheets SB1 is in the setting failure state. It is noted that the control portion 7 may stop the conveyance of the sheet SH1 until a user operation is accepted in the operation display portion 5.

In this manner, the image forming apparatus 200 can determine whether or not the stack of sheets SB1 placed on the lift plate 31 is in the setting failure state based on the speed information acquired by the acquisition processing portion 42.

Incidentally, in the image forming apparatus 100, the pickup roller 22 may deteriorate, and a conveying amount of the uppermost sheet SH1 in the stack of sheets SB1 by the pickup roller 22 may decrease. However, there has conventionally been no technology for acquiring the conveying amount of the uppermost sheet SH1 in the stack of sheets SB1 by the pickup roller 22.

In contrast, in an image forming apparatus 300 according to a third embodiment of the present disclosure, it is possible to acquire the conveying amount of the uppermost sheet SH1 in the stack of sheets SB1 by the pickup roller 22 as will be described below.

### [Third embodiment]

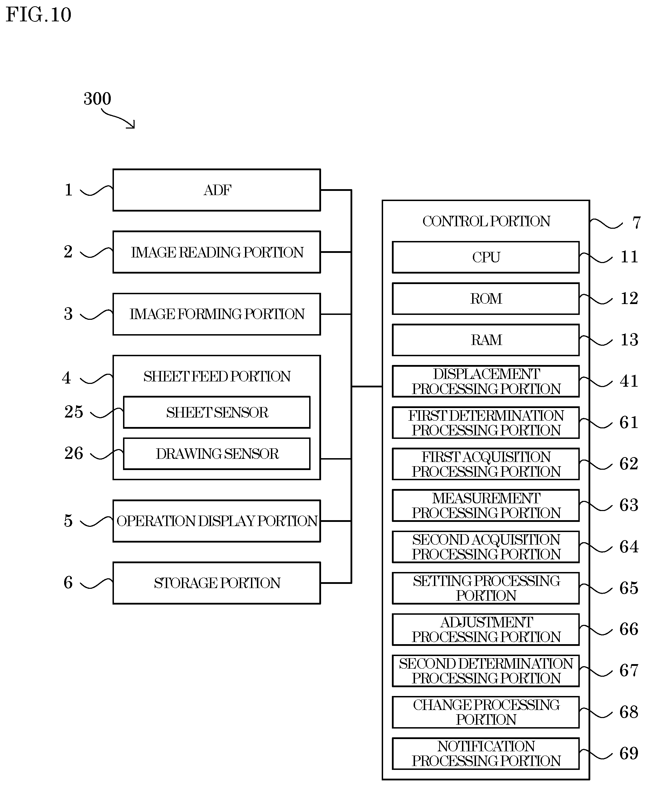

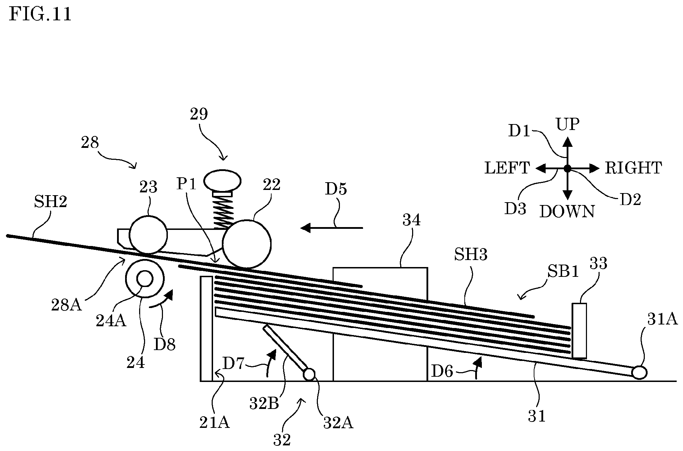

Hereinafter, a configuration of the image forming apparatus 300 according to the third embodiment of the present disclosure will be described with reference to Fig. 10 and Fig. 11.

The image forming apparatus 300 has the same configuration as the image forming apparatus 100 except that the configurations of the sheet feed portion 4 and the control portion 7 differ. Specifically, as shown in Fig. 4 and Fig. 11, the sheet feed portion 4 of the image forming apparatus 300 includes a bias portion 29. In addition, as shown in Fig. 3 and Fig. 10, the control portion 7 of the image forming apparatus 300 includes a first determination processing portion 61, a first acquisition processing portion 62, a measurement processing portion 63, a second acquisition processing portion 64, a setting processing portion 65, an adjustment processing portion 66, a second determination processing portion 67, a change processing portion 68, and a notification processing portion 69 in place of the acquisition processing portion 42, the setting processing portion 43, the determination processing portion 44, and the notification processing portion 45. Hereinafter, descriptions will only be given on portions of the configuration of the image forming apparatus 300 that are different from those of the image forming apparatus 100.

The bias portion 29 biases the pickup roller 22 toward the stack of sheets SB1. The bias portion 29 includes a coil spring that biases a holder that rotatably supports the pickup roller 22 downwardly, and a cam that is provided to oppose the holder across the coil spring and changes a bias force of the coil spring.

When the stack of sheets SB1 is lifted by the lift plate 31, the first determination processing portion 61 determines whether or not an execution condition of measurement processing is satisfied, the measurement processing being processing of measuring an elapsed time from the start of supply of the sheet SH1 by the sheet supply portion 28 to the time when the sheet SH1 is detected by the sheet sensor 25 after the pickup roller 22 is rotated by a predetermined reference amount.

For example, the execution condition is a condition in which the number of consecutive executions of the processing by the first acquisition processing portion 62 reaches a predetermined specific number of times. The number of consecutive executions of the processing by the first acquisition processing portion 62 is counted by the control portion 7. In addition, the number of consecutive executions of the processing by the first acquisition processing portion 62 is reset when the processing by the measurement processing portion 63 is executed. It is noted that the execution condition may alternatively be a condition in which a cumulative total value of the number of times of attachment and detachment of the sheet feed cassette 21 reaches an integral multiple of a predetermined value. Moreover, the execution condition may alternatively be a condition in which a cumulative number of sheets SH1 supplied by the sheet supply portion 28 reaches an integral multiple of a predetermined value.

For example, the first determination processing portion 61 determines whether or not the execution condition is satisfied when the lift of the stack of sheets SB1 by the lift plate 31 is a first lift after the sheet feed cassette 21 is attached to the housing 100A.

For example, the first determination processing portion 61 determines whether or not the execution condition is satisfied every time the stack of sheets SB1 is lifted by the lift plate 31.

When it is determined by the first determination processing portion 61 that the execution condition is not satisfied, the first acquisition processing portion 62 acquires the speed information related to the conveying speed of the sheet SH1 by the sheet supply portion 28 using the sheet sensor 25.

The first acquisition processing portion 62 acquires the speed information by the same method as the acquisition processing portion 42.

The measurement processing portion 63 executes the measurement processing when it is determined by the first determination processing portion 61 that the execution condition is satisfied.

For example, the measurement processing portion 63 executes the measurement processing when the sheet SH1 is supplied for the first time after the stack of sheets SB1 is lifted by the lift plate 31.

It is noted that the measurement processing portion 63 may execute the measurement processing when a second or subsequent sheet SH1 is supplied after the stack of sheets SB1 is lifted by the lift plate 31.

The second acquisition processing portion 64 acquires the conveying amount of the sheet SH1 when the pickup roller 22 is rotated by the reference amount based on the acquisition result obtained by the first acquisition processing portion 62 and the measurement result obtained by the measurement processing.

For example, when the elapsed time is measured by the measurement processing portion 63, the second acquisition processing portion 64 acquires the speed information that has been stored last out of the speed information stored in the second storage area of the storage portion 6. Then, the second acquisition processing portion 64 subtracts the multiplication result of the acquired speed information (conveying speed) and the elapsed time measured by the measurement processing portion 63 from the specific conveying distance, to calculate the conveying amount of the sheet SH1 when the pickup roller 22 is rotated by the reference amount. It is noted that the second acquisition processing portion 64 may acquire the conveying amount of the sheet SH1 by using the speed information that has been stored last out of the speed information corresponding to the type of the sheet SH1 conveyed at the time of the measurement of the elapsed time by the measurement processing portion 63, that is stored in the second storage area of the storage portion 6.

For example, the second acquisition processing portion 64 stores the acquired conveying amount of the sheet SH1 in a predetermined third storage area of the storage portion 6 in association with the acquired date and time of the conveying amount. It is noted that the second acquisition processing portion 64 may alternatively store the acquired conveying amount of the sheet SH1 in the third storage area in association with the type of the sheet SH1 conveyed at the time of the acquisition of the conveying amount.

The setting processing portion 65 sets an initial conveying amount based on the acquisition result obtained by the second acquisition processing portion 64.

For example, when the conveying amount of the sheet SH1 is acquired by the second acquisition processing portion 64 and the setting condition is satisfied, the setting processing portion 65 sets an average value of the conveying amounts of the sheet SH1 stored in the third storage area of the storage portion 6 as the initial conveying amount.

It is noted that the setting processing portion 65 may set the initial conveying amount for each type of the sheet SH1.

The adjustment processing portion 66 adjusts the bias force of the bias portion 29 based on the acquisition result obtained by the second acquisition processing portion 64.

For example, when a difference between the conveying amount of the sheet SH1 acquired by the second acquisition processing portion 64 and the initial conveying amount exceeds a predetermined amount, the adjustment processing portion 66 adjusts the bias force of the bias portion 29 so that the bias force of the bias portion 29 becomes stronger.

For example, the adjustment processing portion 66 adjusts the bias force of the bias portion 29 by rotating the cam.

The second determination processing portion 67 determines whether or not a maintenance timing for the pickup roller 22 has arrived based on the acquisition result obtained by the second acquisition processing portion 64.

For example, the second determination processing portion 67 determines whether or not the maintenance timing for the pickup roller 22 has arrived based on the conveying amount of the sheet SH1 when the pickup roller 22 is rotated by the reference amount, that is obtained after setting the initial conveying amount, and the initial conveying amount.

For example, the second determination processing portion 67 determines that the maintenance timing for the pickup roller 22 has arrived when the conveying amount of the sheet SH1 is acquired by the second acquisition processing portion 64 and a difference between the acquired conveying amount of the sheet SH1 and the initial conveying amount exceeds a predetermined third threshold value.

The change processing portion 68 changes the execution condition so that the frequency at which the execution condition is satisfied increases as the difference between the initial conveying amount and the conveying amount of the sheet SH1 acquired by the second acquisition processing portion 64 increases. For example, the change processing portion 68 changes the execution condition so that the frequency at which the execution condition is satisfied increases every time the difference between the initial conveying amount and the conveying amount of the sheet SH1 acquired by the second acquisition processing portion 64 reaches an integral multiple of a predetermined reference conveying amount. The reference conveying amount is a value smaller than the third threshold value.

For example, the change processing portion 68 decrements the specific number of times every time the difference between the initial conveying amount and the conveying amount of the sheet SH1 acquired by the second acquisition processing portion 64 reaches an integral multiple of the reference conveying amount.

It is noted that the change processing portion 68 may change the execution condition such that the frequency at which the execution condition is satisfied increases as the cumulative number of sheets SH1 supplied by the sheet supply portion 28 increases. For example, the change processing portion 68 may change the execution condition such that the frequency at which the execution condition is satisfied increases every time the cumulative number of sheets SH1 supplied by the sheet supply portion 28 reaches an integral multiple of a predetermined reference number of sheets.

When it is determined by the second determination processing portion 67 that the maintenance timing for the pickup roller 22 has arrived, the notification processing portion 69 notifies to that effect.

For example, when it is determined by the second determination processing portion 67 that the maintenance timing for the pickup roller 22 has arrived, the notification processing portion 69 causes the operation display portion 5 to display a third notification screen that includes a message notifying to that effect.

### [Third sheet feed processing]

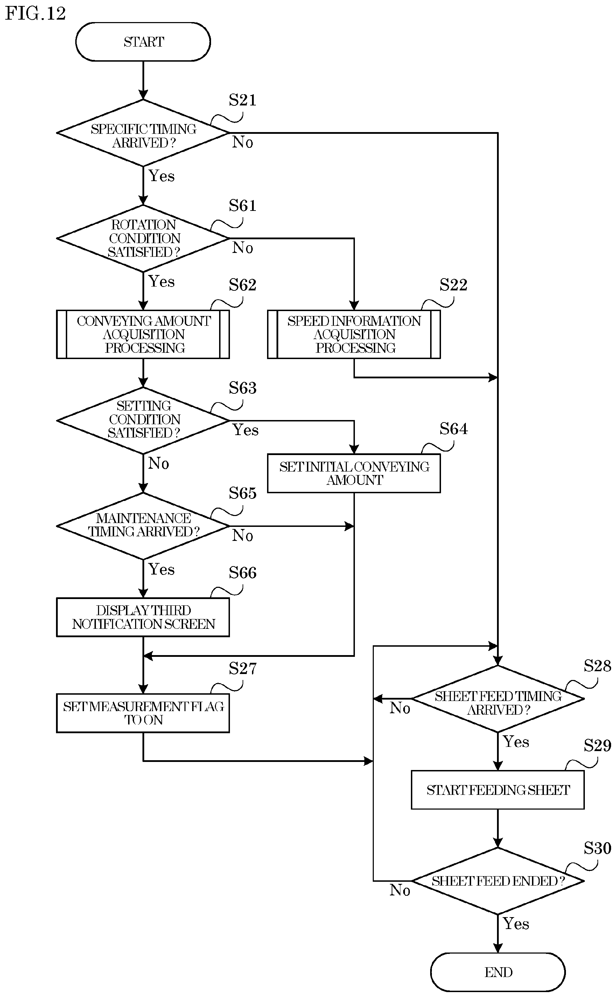

Next, exemplary procedures of third sheet feed processing executed by the control portion 7 in the image forming apparatus 300 will be described with reference to Fig. 12.

As shown in Fig. 6 and Fig. 12, the third sheet feed processing is the same as the first sheet feed processing except that processing of Step S61 to Step S66 is executed in place of the processing of Step S23 to Step S26 and that the execution timing of the processing of Step S22 differs. Hereinafter, descriptions will only be given on portions of the third sheet feed processing that are different from those of the first sheet feed processing.

### <Step S61>

In Step S61, the control portion 7 determines whether or not the execution condition is satisfied. The processing of Step S61 is an example of a first determination step according to the present disclosure and is executed by the first determination processing portion 61 of the control portion 7.

Specifically, the control portion 7 determines that the execution condition is satisfied when the number of consecutive executions of the processing of Step S22 reaches the specific number of times.

Herein, when determining that the execution condition is satisfied (Yes in S61), the control portion 7 shifts the processing to Step S62. On the other hand, when determining that the execution condition is not satisfied (No in S61), the control portion 7 shifts the processing to Step S22.

### <Step S62>

In Step S62, the control portion 7 executes conveying amount acquisition processing to be described below.

### [Conveying amount acquisition processing]

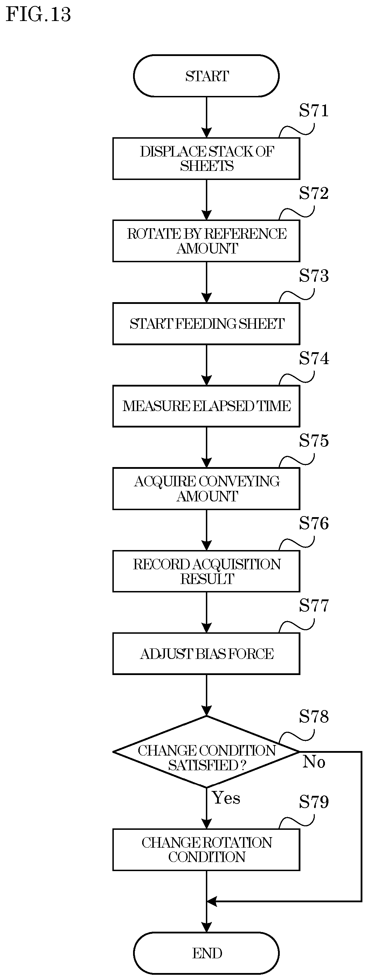

Herein, exemplary procedures of the conveying amount acquisition processing executed in Step S62 in the third sheet feed processing will be described with reference to Fig. 13.

### <Step S71>

First, in Step S71, the control portion 7 displaces the stack of sheets SB1 placed in the sheet feed cassette 21 to a position at which the stack of sheets SB1 comes into contact with the pickup roller 22 using the lift plate 31. The processing of Step S71 is executed by the displacement processing portion 41 of the control portion 7.

### <Step S72>

In Step S72, the control portion 7 rotates the pickup roller 22 by the reference amount.

### <Step S73>

In Step S73, the control portion 7 causes the sheet supply portion 28 to start supplying the sheet SH1.

An image that is based on image data is formed on the sheet SH1 fed by the processing of Step S73 by the image forming portion 3.

### <Step S74>

In Step S74, the control portion 7 measures the elapsed time from the start of supply of the sheet SH1 by the sheet supply portion 28 to the time when the sheet SH1 is detected by the sheet sensor 25. The processing of Step S74 is an example of a measurement step according to the present disclosure and is executed by the measurement processing portion 63 of the control portion 7.

### <Step S75>

In Step S75, the control portion 7 acquires the conveying amount of the sheet SH1 when the pickup roller 22 is rotated by the reference amount. The processing of Step S75 is an example of a second acquisition step according to the present disclosure and is executed by the second acquisition processing portion 64 of the control portion 7.

Specifically, the control portion 7 acquires the speed information that has been stored last out of the speed information stored in the second storage area of the storage portion 6. Then, the control portion 7 subtracts the multiplication result of the acquired speed information (conveying speed) and the elapsed time measured by the processing of Step S74 from the specific conveying distance, to calculate the conveying amount of the sheet SH1 when the pickup roller 22 is rotated by the reference amount.

### <Step S76>

In Step S76, the control portion 7 records the conveying amount of the sheet SH1 acquired by the processing of Step S75.

Specifically, the control portion 7 stores the conveying amount of the sheet SH1 acquired by the processing of Step S75 in the third storage area of the storage portion 6 in association with the acquired date and time of the conveying amount.

### <Step S77>

In Step S77, the control portion 7 adjusts the bias force of the bias portion 29 based on the conveying amount of the sheet SH1 acquired by the processing of Step S75. The processing of Step S77 is executed by the adjustment processing portion 66 of the control portion 7.

Specifically, when a difference between the conveying amount of the sheet SH1 acquired by the processing of Step S75 and the initial conveying amount exceeds a predetermined amount, the control portion 7 adjusts the bias force of the bias portion 29 so that the bias force of the bias portion 29 becomes stronger. Thus, it is possible to suppress a decrease in the conveying amount of the sheet SH1 by the pickup roller 22 due to deterioration of the pickup roller 22.

### <Step S78>

In Step S78, the control portion 7 determines whether or not a change condition for the execution condition is satisfied.

Specifically, the control portion 7 determines that the change condition is satisfied when a difference between the initial conveying amount and the conveying amount of the sheet SH1 acquired by the processing of Step S75 reaches an integral multiple of the reference conveying amount.

Herein, when determining that the change condition is satisfied (Yes in S78), the control portion 7 shifts the processing to Step S79. On the other hand, when determining that the change condition is not satisfied (No in S78), the control portion 7 ends the conveying amount acquisition processing.

### <Step S79>

In Step S79, the control portion 7 changes the execution condition. The processing of Step S79 is executed by the change processing portion 68 of the control portion 7.

Specifically, the control portion 7 decrements the specific number of times. Thus, it is possible to increase a frequency of the determination by the second determination processing portion 67 as the deterioration of the pickup roller 22 proceeds.

With this, the description of the conveying amount acquisition processing ends, and the description of the third sheet feed processing will be resumed.

### <Step S63>

In Step S63, the control portion 7 determines whether or not the setting condition is satisfied.

Specifically, the control portion 7 determines that the setting condition is satisfied when the cumulative number of times the sheet SH1 is supplied by the sheet supply portion 28 is smaller than the reference number of times.

Herein, when determining that the setting condition is satisfied (Yes in S63), the control portion 7 shifts the processing to Step S64. On the other hand, when determining that the setting condition is not satisfied (No in S63), the control portion 7 shifts the processing to Step S65.

### <Step S64>

In Step S64, the control portion 7 sets the initial conveying amount. The processing of Step S64 is executed by the setting processing portion 65 of the control portion 7.

Specifically, the control portion 7 sets an average value of the conveying amounts of the sheet SH1 stored in the third storage area of the storage portion 6 as the initial conveying amount.

### <Step S65>

In Step S65, the control portion 7 determines whether or not the maintenance timing for the pickup roller 22 has arrived. The processing of Step S65 is executed by the second determination processing portion 67 of the control portion 7.

Specifically, the control portion 7 determines that the maintenance timing for the pickup roller 22 has arrived when a difference between the conveying amount of the sheet SH1 that has been stored last out of the conveying amounts of the sheet SH1 stored in the third storage area of the storage portion 6 and the initial conveying amount exceeds the third threshold value.

Herein, when determining that the maintenance timing for the pickup roller 22 has arrived (Yes in S65), the control portion 7 shifts the processing to Step S66. On the other hand, when determining that the maintenance timing for the pickup roller 22 has not arrived (No in S65), the control portion 7 shifts the processing to Step S27.

### <Step S66>

In Step S66, the control portion 7 causes the operation display portion 5 to display the third notification screen. The processing of Step S66 is executed by the notification processing portion 69 of the control portion 7.

Thus, it becomes possible for a user of the image forming apparatus 300 to recognize that the maintenance timing for the pickup roller 22 has arrived. It is noted that the control portion 7 may stop the conveyance of the sheet SH1 until a user operation is accepted in operation display portion 5.

In this manner, the image forming apparatus 300 can acquire the conveying amount of the uppermost sheet SH1 in the stack of sheets SB1 by the pickup roller 22 based on the speed information acquired by the first acquisition processing portion 62 and the elapsed time measured by the measurement processing portion 63.

It is noted that the setting processing portion 65 may set an initial elapsed time by a method similar to that of the initial conveying amount based on the measurement result obtained by the measurement processing portion 63. Further, the second determination processing portion 67 may determine whether or not the maintenance timing for the pickup roller 22 has arrived based on the elapsed time measured by the measurement processing portion 63 after setting the initial elapsed time and the initial elapsed time. In this case, the image forming apparatus 300 does not need to include the first determination processing portion 61, the first acquisition processing portion 62, the second acquisition processing portion 64, the adjustment processing portion 66, and the change processing portion 68.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1>

A sheet conveying device, including: a lift portion which lifts a stack of sheets; a sheet supply portion which includes a conveying member which rotates while being in contact with an upper surface of the stack of sheets lifted by the lift portion, and supplies a sheet that comes into contact with the conveying member to a conveying path; a detection portion which detects the sheet supplied by the sheet supply portion on the conveying path; and an acquisition processing portion which acquires, only when the stack of sheets is lifted by the lift portion, speed information related to a conveying speed of the sheet by the sheet supply portion using the detection portion.

### <Note 2>

The sheet conveying device according to note 1, including: a sheet storing portion which is detachably provided in a housing of the sheet conveying device and stores the stack of sheets, in which the lift portion is provided in the sheet storing portion, and the acquisition processing portion acquires the speed information when the lift of the stack of sheets by the lift portion is a first lift after the sheet storing portion is attached to the housing.

### <Note 3>

The sheet conveying device according to note 1 or 2, in which the acquisition processing portion acquires the speed information at a time when the sheet is supplied for a first time after the stack of sheets is lifted by the lift portion.

### <Note 4>

The sheet conveying device according to any one of notes 1 to 3, including: a determination processing portion which determines whether or not a maintenance timing for the sheet supply portion has arrived based on an acquisition result obtained by the acquisition processing portion.

### <Note 5>

The sheet conveying device according to note 4, in which the acquisition processing portion acquires the speed information every time the stack of sheets is lifted by the lift portion, the sheet conveying device includes: a setting processing portion which sets initial speed information based on the acquisition result obtained by the acquisition processing portion, and the determination processing portion determines whether or not the maintenance timing has arrived based on the speed information acquired after setting the initial speed information and the initial speed information.

### <Note 6>

The sheet conveying device according to note 5, in which the setting processing portion sets the initial speed information for each type of the sheet, and the determination processing portion determines whether or not the maintenance timing has arrived based on the initial speed information corresponding to the type of the sheet conveyed at a time of the acquisition of the speed information by the acquisition processing portion out of pieces of the initial speed information respectively corresponding to the types of the sheets.

### <Note 7>

The sheet conveying device according to any one of notes 4 to 6, including: a notification processing portion which, when it is determined by the determination processing portion that the maintenance timing has arrived, notifies to that effect.

### <Note 8>

An image forming apparatus, including: the sheet conveying device according to any one of notes 1 to 7; and an image forming portion which forms an image on the sheet conveyed by the sheet conveying device.

### <Note 9>

An acquisition method executed in a sheet conveying device including a lift portion which lifts a stack of sheets, a sheet supply portion which includes a conveying member which rotates while being in contact with an upper surface of the stack of sheets lifted by the lift portion, and supplies a sheet that comes into contact with the conveying member to a conveying path, and a detection portion which detects the sheet supplied by the sheet supply portion on the conveying path, the acquisition method including: an acquisition step of acquiring, only when the stack of sheets is lifted by the lift portion, speed information related to a conveying speed of the sheet by the sheet supply portion using the detection portion.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A sheet conveying device, comprising:
a lift portion (31) which lifts a stack of sheets (SB1);
a sheet supply portion (28) which includes a conveying member (22) which rotates while being in contact with an upper surface of the stack of sheets (SB1) lifted by the lift portion (31), and supplies a sheet (SH1) that comes into contact with the conveying member (22) to a conveying path (27);
a detection portion (25) which detects the sheet (SH1) supplied by the sheet supply portion (28) on the conveying path (27); and
an acquisition processing portion (42) which acquires, only when the stack of sheets (SB1) is lifted by the lift portion (31), speed information related to a conveying speed of the sheet (SH1) by the sheet supply portion (28) using the detection portion (25).

2. The sheet conveying device according to claim 1, comprising:
a sheet storing portion (21) which is detachably provided in a housing (100A) of the sheet conveying device and stores the stack of sheets (SB1), wherein
the lift portion (31) is provided in the sheet storing portion (21), and
the acquisition processing portion (42) acquires the speed information when the lift of the stack of sheets (SB1) by the lift portion (31) is a first lift after the sheet storing portion (21) is attached to the housing (100A).

3. The sheet conveying device according to claim 1 or 2, wherein
the acquisition processing portion (42) acquires the speed information at a time when the sheet (SH1) is supplied for a first time after the stack of sheets (SB1) is lifted by the lift portion (31).

4. The sheet conveying device according to any one of claim 1 to 3, comprising:
a determination processing portion (44) which determines whether or not a maintenance timing for the sheet supply portion (28) has arrived based on an acquisition result obtained by the acquisition processing portion (42).

5. The sheet conveying device according to claim 4, wherein
the acquisition processing portion (42) acquires the speed information every time the stack of sheets (SB1) is lifted by the lift portion (31),
the sheet conveying device comprises:
a setting processing portion (43) which sets initial speed information based on the acquisition result obtained by the acquisition processing portion (42), and
the determination processing portion (44) determines whether or not the maintenance timing has arrived based on the speed information acquired after setting the initial speed information and the initial speed information.

6. The sheet conveying device according to claim 5, wherein
the setting processing portion (43) sets the initial speed information for each type of the sheet (SH1), and
the determination processing portion (44) determines whether or not the maintenance timing has arrived based on the initial speed information corresponding to the type of the sheet (SH1) conveyed at a time of the acquisition of the speed information by the acquisition processing portion (42) out of pieces of the initial speed information respectively corresponding to the types of the sheets (SH1).

7. The sheet conveying device according to any one of claim 4 to 6, comprising:
a notification processing portion (45) which, when it is determined by the determination processing portion (44) that the maintenance timing has arrived, notifies to that effect.

8. An image forming apparatus (100), comprising:
the sheet conveying device according to any one of claim 1 to 7; and
an image forming portion (3) which forms an image on the sheet (SH1) conveyed by the sheet conveying device.

9. An acquisition method executed in a sheet conveying device including a lift portion (31) which lifts a stack of sheets (SB1), a sheet supply portion (28) which includes a conveying member (22) which rotates while being in contact with an upper surface of the stack of sheets (SB1) lifted by the lift portion (31), and supplies a sheet (SH1) that comes into contact with the conveying member (22) to a conveying path (27), and a detection portion (25) which detects the sheet (SH1) supplied by the sheet supply portion (28) on the conveying path (27), the acquisition method comprising:
an acquisition step of acquiring, only when the stack of sheets (SB1) is lifted by the lift portion (31), speed information related to a conveying speed of the sheet (SH1) by the sheet supply portion (28) using the detection portion (25).
